# EUROPEAN PATENT APPLICATION

(11) **EP 3 419 355 A1**
(43) Date of publication of application: **26.12.2018**
(21) Application number: 16896023.5
(22) Date of filing: 31.03.2016
(51) Int. Cl.: H04W 72/02

(54) **RESOURCE SCHEDULING METHOD AND APPARATUS**

(71) Applicant: Huawei Technologies Co., Ltd., Longgang District Shenzhen, Guangdong 518129 (CN)
(72) Inventor: SUN, Yinghua, Shenzhen Guangdong 518129 (CN); ZHANG, Xingwei, Shenzhen Guangdong 518129 (CN); LI, Chao, Shenzhen Guangdong 518129 (CN)
(74) Representative: Maiwald Patent- und Rechtsanwaltsgesellschaft mbH
(86) International application number: PCT/CN2016/078209
(87) International publication number: WO 2017/166243

(57) **Abstract**

Embodiments of the present invention provide a resource scheduling method and apparatus. The method includes: performing, by first UE, energy measurement on at least one first resource in a resource pool; determining, by the first UE based on an energy measurement result corresponding to the first resource, a probability of sending data on the first resource; and sending, by the first UE, data based on the probability of sending data on the first resource, where the first resource is a resource, in the resource pool, that is not indicated as being occupied. Using this resource scheduling method can reduce resource collision, thereby improving communication reliability.

## Description

### TECHNICAL FIELD

Embodiments of the present invention relate to the field of communications technologies, and in particular, to a resource scheduling method and apparatus.

### BACKGROUND

In the prior art, device to device (Device to Device, D2D for short) communication includes two modes of resource scheduling. A first mode is to schedule resources in a centralized control method, where resources of D2D are scheduled by a base station or a relay node, and user equipment (User Equipment, UE for short) directly transmits data and control information on an allocated resource. This centralized control mode of resource scheduling is mainly intended for scenarios with network coverage. A second mode is a manner of contention based on UE selection. This mode is a distributed resource multiplexing method, where the UE obtains a transmit resource from a resource pool through contention. In a scenario with network coverage, a resource pool is a whole block of resources allocated by a base station, and all UEs contend for resources in this whole block of resources. In a scenario without network coverage, all UEs can obtain a pre-defined block of resources and contend for resources in the pre-defined resources. Similarly, in future V2X (including: vehicle to vehicle (Vehicle to Vehicle, V2V for short), vehicle to infrastructure (Vehicle to Infrastructure, V2I for short), and vehicle to pedestrian (Vehicle to Pedestrian, V2P for short) communication, the manner of the foregoing second mode is also to be used, and UE obtains a transmit resource from a resource pool through contention.

In the prior art, when contending for a resource in a resource pool, UE first determines a resource, in the resource pool, that is not indicated as being occupied, and then sends data by using any resource in the resource pool other than the resource that is not indicated as being occupied. However, for a resource that is not indicated as being occupied, two cases may exist. A first case is that the resource is indeed a resource that can be used by the UE without causing resource collision. A second case is that, actually, another UE has been instructed to send or is already sending data on the resource, but because the UE cannot obtain data sent by the another UE due to resource collision, the UE thinks that the resource has not been occupied by the another UE.

In the foregoing second case, the UE may still send data on the resource that is not indicated as being occupied, causing further resource collision, and thereby reducing communication reliability.

### SUMMARY

Embodiments of the present invention provide a resource scheduling method and apparatus, so as to reduce resource collision between UEs, thereby improving communication reliability.

According to a first aspect, an embodiment of the present invention provides a resource scheduling method, including:
performing, by first UE, energy measurement on at least one first resource in a resource pool;
determining, by the first UE based on an energy measurement result corresponding to the first resource, a probability of sending data on the first resource; and
sending, by the first UE, data based on the probability of sending data on the first resource, where
the first resource is a resource, in the resource pool, that is not indicated as being occupied.

A higher data sending probability indicates a lower possibility of resource collision occurring on the corresponding first resource. Because the first UE sends data based on the probability of sending data on the first resource, using this resource scheduling method can reduce resource collision, thereby improving communication reliability.

Optionally, the sending, by the first UE, data based on the probability of sending data on the first resource includes:
a higher data sending probability corresponding to the first resource indicates more data sent by the first UE on the first resource; and correspondingly, a lower data sending probability corresponding to the first resource indicates less data sent by the first UE on the first resource.

Optionally, the sending, by the first UE, data based on the probability of sending data on the first resource includes: determining, by the first UE, a first resource corresponding to which a probability is higher than a preset value as a third resource, and sending the data on the third resource.

Optionally, the resource pool is a scheduling assignment resource pool or a data resource pool, where the scheduling assignment resource pool includes at least one scheduling assignment resource; and the scheduling assignment resource is used to carry scheduling assignment information sent by second UE, where the scheduling assignment information is used to indicate a data resource, in the data resource pool, used to carry to-be-sent data of the second UE.

Therefore, the foregoing resource scheduling method is applicable to an SA resource pool, and also applicable to a data resource pool. Specifically, the following several combination manners may be used: (1) The foregoing resource scheduling method is used for the SA resource pool, and not used for the data resource pool; (2) the foregoing resource scheduling method is used for the SA resource pool, and also used for the data resource pool; and (3) the foregoing resource scheduling method is not used for the SA resource pool, and used for the data resource pool. The three combination manners can all achieve an effect of reducing resource collision, thereby improving communication reliability.

Optionally, the determining, by the first UE based on an energy measurement result corresponding to the first resource, a probability of sending data on the first resource includes: determining, by the first UE based on the energy measurement result corresponding to the first resource, a preset energy range corresponding to the energy measurement result; and determining, by the first UE based on the preset energy range, the probability of sending data on the first resource, where
a greater energy measurement result is corresponding to a lower probability of sending data on the first resource, and a smaller energy measurement result is corresponding to a higher probability of sending data on the first resource.

Defining of the preset energy range is not limited in the present invention, provided that the energy measurement result is inversely proportional to the data sending probability. In addition, a feature attribute of to-be-sent data is not limited.

Optionally, before the determining, by the first UE based on the energy measurement result corresponding to the first resource, a preset energy range corresponding to the energy measurement result, the method further includes:
determining, by the first UE, a feature attribute of to-be-sent data; and
the determining, by the first UE based on the energy measurement result corresponding to the first resource, a preset energy range corresponding to the energy measurement result includes: determining, by the UE based on the energy measurement result corresponding to the first resource and the feature attribute of the to-be-sent data, the preset energy range corresponding to the energy measurement result.

The corresponding preset energy range can be more accurately determined with reference to the feature attribute of the to-be-sent data of the first UE and the energy measurement result corresponding to the first resource.

Optionally, before the sending, by the first UE, data based on the probability of sending data on the first resource, the method further includes:
determining, by the first UE, whether a preset condition is met; and
if the preset condition is met, performing the step of sending, by the first UE, data based on the probability of sending data on the first resource; or
if the preset condition is not met, performing the step of performing, by the first UE, energy measurement on at least one first resource in the resource pool, where
the preset condition includes that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

Optionally, the performing, by first user equipment UE, energy measurement on at least one first resource in a resource pool includes: performing, by the first UE, reference signal received power RSRP measurement or reference signal received quality RSRQ measurement on the at least one first resource in the resource pool.

The following describes a resource scheduling apparatus provided in an embodiment of the present invention. The apparatus portion is corresponding to the foregoing method with a same corresponding technical effect, and details are not described herein again.

According to a second aspect, an embodiment of the present invention provides a resource scheduling apparatus, the apparatus is first user equipment UE, and the apparatus includes:
a measurement module, configured to perform energy measurement on at least one first resource in a resource pool;
a determining module, configured to determine, based on an energy measurement result corresponding to the first resource, a probability of sending data on the first resource; and
a sending module, configured to send data based on the probability of sending data on the first resource, where
the first resource is a resource, in the resource pool, that is not indicated as being occupied.

Optionally, the resource pool is a scheduling assignment resource pool or a data resource pool, where
the scheduling assignment resource pool includes at least one scheduling assignment resource; and
the scheduling assignment resource is used to carry scheduling assignment information sent by second UE, where the scheduling assignment information is used to indicate a data resource, in the data resource pool, used to carry to-be-sent data of the second UE.

Optionally, the determining module is specifically configured to: determine, based on the energy measurement result corresponding to the first resource, a preset energy range corresponding to the energy measurement result; and determine, based on the preset energy range, the probability of sending data on the first resource, where a greater energy measurement result is corresponding to a lower probability of sending data on the first resource, and a smaller energy measurement result is corresponding to a higher probability of sending data on the first resource.

Optionally, the determining module is further configured to determine a feature attribute of to-be-sent data, and the determining module is specifically configured to determine, based on the energy measurement result corresponding to the first resource and the feature attribute of the to-be-sent data, the preset energy range corresponding to the energy measurement result.

Optionally, the apparatus further includes a judgment module, where the judgment module is configured to determine whether a preset condition is met; and if the preset condition is met, the sending module sends data based on the probability of sending data on the first resource; or if the preset condition is not met, the measurement module performs energy measurement on at least one first resource in the resource pool, where
the preset condition includes that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

Optionally, the measurement module is specifically configured to perform reference signal received power RSRP measurement or reference signal received quality RSRQ measurement on the at least one first resource in the resource pool.

According to a third aspect, an embodiment of the present invention provides a resource scheduling apparatus, the apparatus is first user equipment UE, and the apparatus includes a processor and a transmitter, where
the processor is configured to:
perform energy measurement on at least one first resource in a resource pool; and determine, based on an energy measurement result corresponding to the first resource, a probability of sending data on the first resource; and
the transmitter is configured to send data based on the probability of sending data on the first resource, where
the first resource is a resource, in the resource pool, that is not indicated as being occupied.

Optionally, the resource pool is a scheduling assignment resource pool or a data resource pool, where the scheduling assignment resource pool includes at least one scheduling assignment resource; and the scheduling assignment resource is used to carry scheduling assignment information sent by second UE, where the scheduling assignment information is used to indicate a data resource, in the data resource pool, used to carry to-be-sent data of the second UE.

Optionally, the processor is specifically configured to: determine, based on the energy measurement result corresponding to the first resource, a preset energy range corresponding to the energy measurement result; and determine, based on the preset energy range, the probability of sending data on the first resource, where a greater energy measurement result is corresponding to a lower probability of sending data on the first resource, and a smaller energy measurement result is corresponding to a higher probability of sending data on the first resource.

Optionally, the processor is further configured to determine a feature attribute of to-be-sent data, and the processor is specifically configured to determine, based on the energy measurement result corresponding to the first resource and the feature attribute of the to-be-sent data, the preset energy range corresponding to the energy measurement result.

Optionally, the processor is further configured to determine whether a preset condition is met; and if the preset condition is met, the transmitter sends data based on the probability of sending data on the first resource; or if the preset condition is not met, the processor performs energy measurement on at least one first resource in the resource pool, where
the preset condition includes that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

Optionally, the processor is specifically configured to perform reference signal received power RSRP measurement or reference signal received quality RSRQ measurement on the at least one first resource in the resource pool.

The embodiments of the present invention provide a resource scheduling method and apparatus. The method includes: performing, by first UE, energy measurement on at least one first resource in a resource pool; determining, by the first UE based on an energy measurement result corresponding to the first resource, a probability of sending data on the first resource; and sending, by the first UE, data based on the probability of sending data on the first resource, where the first resource is a resource, in the resource pool, that is not indicated as being occupied. A higher data sending probability indicates a lower possibility of resource collision occurring on the corresponding first resource. Because the first UE sends data based on the probability of sending data on the first resource, using this resource scheduling method can reduce resource collision, thereby improving communication reliability.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an SA resource pool and a data resource pool in the prior art;
FIG. 2A is a schematic diagram of SA resource collision according to an embodiment of the present invention;
FIG. 2B is a schematic diagram of data resource collision according to an embodiment of the present invention;
FIG. 3 is a flowchart of a resource scheduling method according to an embodiment of the present invention;
FIG. 4 is a schematic diagram of a resource pool according to an embodiment of the present invention;
FIG. 5 is a flowchart of a resource scheduling method according to another embodiment of the present invention;
FIG. 6 is a flowchart of a resource scheduling method according to still another embodiment of the present invention;
FIG. 7 is a schematic structural diagram of a resource scheduling apparatus according to an embodiment of the present invention; and
FIG. 8 is a schematic structural diagram of a resource scheduling apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Development of Long Term Evolution (Long Term Evolution, LTE for short) communications technologies has posed increasingly heavy burden on a cellular network, existing spectrum resources are increasingly tending to be exhausted, and currently most UEs are using wireless technologies such as Bluetooth and Wireless Fidelity (Wireless Fidelity, Wi-Fi for short). Therefore, operators of these technologies have realized that direct communication between devices is to become hot in the future. To adapt to this trend, D2D communication and V2X communication have emerged.

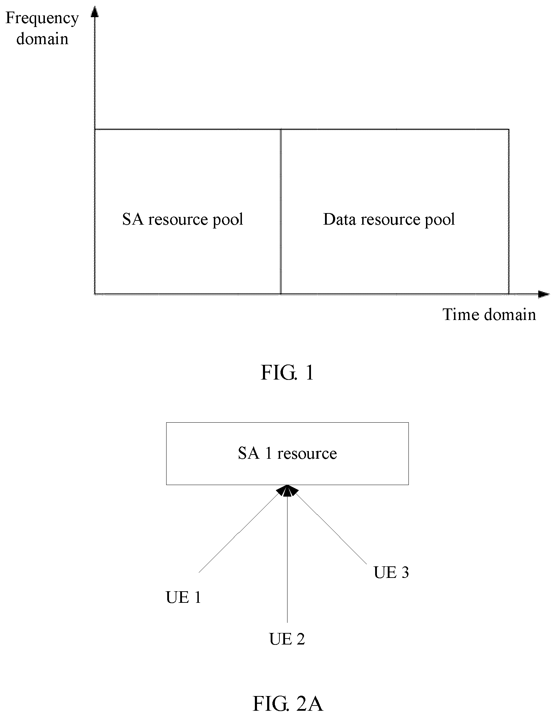

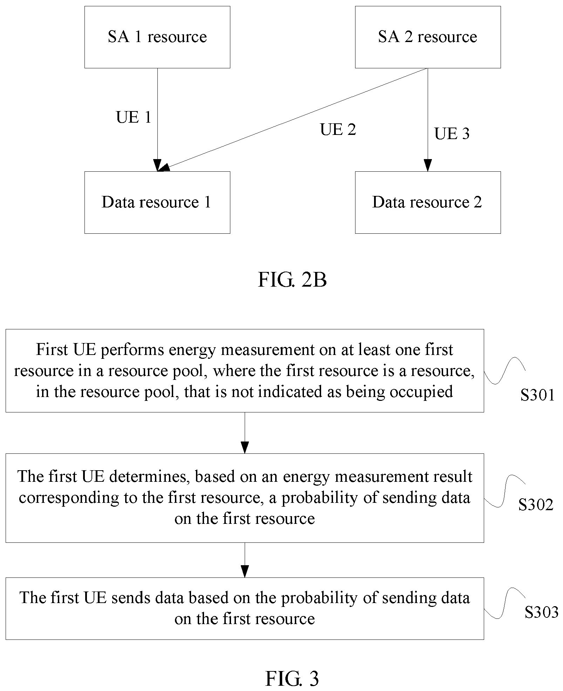

In D2D communication and V2X communication, a resource pool is divided into a scheduling assignment (Scheduling Assignment, SA for short) resource pool and a data resource pool that are located in different subframes and use a time division multiplexing (Time Division Multiplexing, TDM for short) manner. FIG. 1 is a schematic diagram of an SA resource pool and a data resource pool in the prior art. As shown in FIG. 1, the SA resource pool precedes the corresponding data resource pool in a time domain direction. Based on a division result of the resource pool, the second case in the Background may be further divided into two possibilities. A first possibility is: FIG. 2A is a schematic diagram of SA resource collision according to an embodiment of the present invention. As shown in FIG. 2A, UE 2 and UE 3 both occupy an SA 1 resource to send scheduling assignment information. Because UE 1 cannot obtain the scheduling assignment information sent by the UE 2 and the UE 3 on the SA 1 resource, the UE 1 determines that the SA 1 resource is not indicated as being occupied. Therefore, the UE 1 may send scheduling assignment information on the SA 1 resource, causing further resource collision on the SA 1 resource. A second possibility is: FIG. 2B is a schematic diagram of data resource collision according to an embodiment of the present invention. As shown in FIG. 2B, UE 2 and UE 3 are subject to collision on SA 2 resource. As a result, UE 1 cannot obtain scheduling assignment information sent by the UE 2 and the UE 3. The UE 2 is to use a data resource 1 and because the UE 1 cannot obtain the scheduling assignment information of the UE 2, the UE 1 determines that the data resource 1 is in an idle state. Therefore, the UE 1 may also use the data resource 1 to send data, and this causes resource collision between the UE 1 and the UE 2 on the data resource 1.

To deduce resource collision between UEs in the prior art and improve communication reliability, the embodiments of the present invention provide a resource scheduling method and apparatus. The method is performed by a resource scheduling apparatus, to be specific, first UE to be mentioned below. An application scenario of the method is a D2D scenario or a V2X scenario, and the method is applicable to the second mode described in the present invention, that is, a contention mode based on UE selection. Specifically, FIG. 3 is a flowchart of a resource scheduling method according to an embodiment of the present invention. As shown in FIG. 3, the method includes the following procedure.

S301: First UE performs energy measurement on at least one first resource in a resource pool, where the first resource is a resource, in the resource pool, that is not indicated as being occupied.

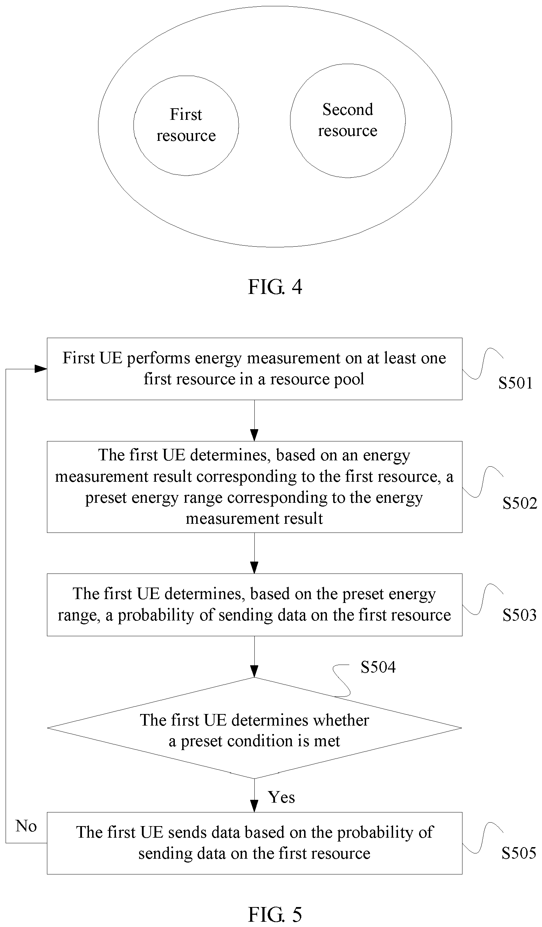

The resource pool may be the foregoing SA resource pool, or may be the data resource pool. At least one first resource may be all first resources in the resource pool or some first resources selected by the first UE from all first resources. FIG. 4 is a schematic diagram of a resource pool according to an embodiment of the present invention. As shown in FIG. 4, the resource pool includes at least one first resource and at least one second resource, and the second resource is a resource that is indicated as being occupied (FIG. 4 only shows that one first resource and one second resource are included). Actually, two cases are differentiated for the first resource. A first case is that the first resource is indeed a resource that can be used by the UE without causing resource collision. A second case is that, actually, another UE has been instructed to send or is already sending data on the first resource, but because the first UE cannot obtain data sent by the another UE due to resource collision, the first UE thinks that the resource has not been occupied by the another UE.

S302: The first UE determines, based on an energy measurement result corresponding to the first resource, a probability of sending data on the first resource.

Based on the foregoing two possibilities for the first resource, the first UE needs to perform energy measurement on a first data resource, and that the first UE performs energy measurement on a first data resource includes: The first UE performs reference signal received power (Reference Signal Receiving Power, RSRP for short) measurement or reference signal received quality (Reference Signal Receiving Quality, RSRQ for short) measurement on the first data resource. A specific measurement method may be a measurement method in the prior art. This is not limited in this embodiment of the present invention. When the energy measurement performed is the RSRP measurement or the RSRQ measurement, the energy measurement result corresponding to the first data resource is inversely proportional to a probability of sending data on the first data resource. For example, a greater energy measurement result indicates a higher resource occupation rate of the corresponding first data resource and a lower probability of sending data on the first data resource by the first UE. Correspondingly, a smaller energy measurement result indicates a lower resource occupation rate of the corresponding first data resource and a higher probability of sending data on the first data resource by the first UE.

S303: The first UE sends data based on the probability of sending data on the first resource.

When the foregoing first resource is an SA resource, the data sent includes the scheduling assignment information described in the present invention, and the scheduling assignment information is used to indicate a data resource, in the data resource pool, used to carry to-be-sent data of second UE. The second UE herein is any UE other than the first UE. When the first resource is a data resource, the data sent is data needing to be sent to another UE by the first UE.

Optionally, that the first UE sends data based on the probability of sending data on the first resource may be: Assuming that data sending probabilities corresponding to a first resource A and a second resource B are 0.2 and 0.8, respectively, when the first UE needs to send 10 pieces of data, among the 10 pieces of data, two pieces of data may be sent by using the first resource A, and eight pieces of data may be sent by using the second resource B.

Optionally, that the first UE sends data based on the probability of sending data on the first resource may alternatively be: The first UE determines a first resource corresponding to which a probability is higher than a preset value as a third resource, and sends the data on the third resource.

In the resource scheduling method provided in this embodiment of the present invention, the first UE determines, based on the energy measurement result corresponding to the first resource, the probability of sending data on the first resource, and sends data based on the probability of sending data on the first resource. A higher data sending probability indicates a lower possibility of resource collision occurring on the corresponding first resource. Because the first UE sends data based on the probability of sending data on the first resource, using this resource scheduling method can reduce resource collision, thereby improving communication reliability.

Based on the previous embodiment, the present invention further provides a resource scheduling method. The method further details the steps in the previous embodiment, or adds technical features to the previous embodiment. Specifically, FIG. 5 is a flowchart of a resource scheduling method according to another embodiment of the present invention. As shown in FIG. 5, the method includes the following steps.

S501: First UE performs energy measurement on at least one first resource in a resource pool.

S501 is the same as S301, and specific descriptions are not repeated herein.

S502: The first UE determines, based on an energy measurement result corresponding to the first resource, a preset energy range corresponding to the energy measurement result.

S503: The first UE determines, based on the preset energy range, a probability of sending data on the first resource.

Step S502 and step S503 are described in combination. The first UE may pre-configure a plurality of preset energy ranges, and each preset energy range is corresponding to one data sending probability. In other words, preset energy ranges are in one-to-one correspondence with data sending probabilities. For example, the first UE pre-configures five preset energy ranges, and a correspondence between the five preset energy ranges and data sending probabilities are as follows:
the preset energy range is [0,a], and the corresponding data sending probability is P1;
the preset energy range is (a,b], and the corresponding data sending probability is P2;
the preset energy range is (b,c], and the corresponding data sending probability is P3;
the preset energy range is (c,d], and the corresponding data sending probability is P4; and
the preset energy range is (d,+oo), and the corresponding data sending probability is P5; where
   0<a<b<c<d=1, and 0<=P5<=P4<=P3<=P2<=P1<=1.

Assuming that an energy measurement result corresponding to a first resource is within [0,a], the corresponding data sending probability is PI.

Optionally, before that the first UE determines, based on an energy measurement result corresponding to the first resource, a preset energy range corresponding to the energy measurement result, the method further includes: The first UE determines a feature attribute of to-be-sent data. In this case, that the first UE determines, based on an energy measurement result corresponding to the first resource, a preset energy range corresponding to the energy measurement result includes: The UE determines, based on the energy measurement result corresponding to the first resource and the feature attribute of the to-be-sent data, the preset energy range corresponding to the energy measurement result.

The feature attribute of the to-be-sent data may be urgent or non-urgent, and the first UE may pre-configure a correspondence between the feature attribute and an attribute factor. For example, if the to-be-sent data is urgent data, a corresponding attribute factor may be configured to be greater than 1; if the to-be-sent data is non-urgent data, a corresponding attribute factor may be configured to be less than or equal to 1. After the first UE determines the attribute factor, the energy measurement result corresponding to the first resource may be multiplied by the attribute factor and a result may be used as a new energy measurement result. Then the data sending probability is finally determined based on a preset energy range to which the new energy measurement result belongs.

It should be noted that defining of the preset energy range is not limited in the present invention, provided that the energy measurement result is inversely proportional to the data sending probability. In addition, the feature attribute of the to-be-sent data is not limited either.

S504: The first UE determines whether a preset condition is met; and if the preset condition is met, performs step S505, or if the preset condition is not met, performs step S501.

S505: The first UE sends data based on the probability of sending data on the first resource.

Step S504 and step S505 are described in combination. The preset condition includes: (1) that the to-be-sent data of the first UE has a highest priority among to-be-sent data on the first resource; (2) that a volume of the to-be-sent data of the first UE has not changed; (3) that quality of a channel desired to be used for the to-be-sent data of the first UE is greater than a quality threshold; (4) that a time for which the first UE occupies the first resource is less than a time threshold; or (5) that a location of the first UE has not changed.

For the first condition, once the first UE determines that a priority of to-be-sent data of given second UE is higher than the first UE, the first UE gives up the first resource to the second UE, so that the second UE sends data.

For the second condition, before D2D or V2X data is transmitted, a certificate may be added to the data. Therefore, a volume of the to-be-sent data may change, and once a change has occurred, a currently determined first resource may not be sufficient or suitable for the first UE to use. In this case, the first UE also needs to reselect a first resource.

For the third condition, once the quality of the channel desired to be used for the to-be-sent data of the first UE is less than the quality threshold, the first UE determines that an effect of sending data on the first resource is relatively poor. In this case, the first UE also needs to reselect a first resource.

For the fourth condition, once the time for which the first UE occupies the first resource is greater than or equal to the time threshold, the first UE needs to reselect a first resource. This time may be a static resource period, a configured energy measurement cycle, or a time interval for resource reservation.

For the fifth condition, in D2D and V2X data communication, once the location of the first UE changes, a corresponding first resource may be reselected.

This embodiment of the present invention provides a method for determining a probability of sending data on the first resource based on the energy measurement result, and further, provides a condition of re-selecting a first resource.

The resource scheduling method in this embodiment of the present invention is applicable to an SA resource pool, and also applicable to a data resource pool. Specifically, the following several combination manners may be used: (1) The foregoing resource scheduling method is used for the SA resource pool, and not used for the data resource pool; (2) the foregoing resource scheduling method is used for the SA resource pool, and also used for the data resource pool; and (3) the foregoing resource scheduling method is not used for the SA resource pool, and used for the data resource pool. The three combination manners can all achieve an effect of reducing resource collision, thereby improving communication reliability. For these three combination manners, four cases may be differentiated: (1) A first resource reselection process is performed for the SA resource pool, and a first resource reselection process is also performed for the data resource pool; (2) a first resource reselection process is performed for the SA resource pool, and no first resource reselection process is performed for the data resource pool; (3) no first resource reselection process is performed for the SA resource pool, and a first resource reselection process is performed for the data resource pool; and (4) no first resource reselection process is performed for the SA resource pool, and no first resource reselection process is performed for the data resource pool either. All of the foregoing possibilities are within the protection scope of the present invention.

In the following, an example is used in which the resource scheduling method is performed and a first resource reselection process is also performed, for an SA resource pool, and the resource scheduling method is performed, and a first resource reselection process is also performed, for a data resource pool. For clear description, a first resource in the SA resource pool is referred to as a first SA resource; and a first resource in the data resource pool is referred as a first data resource.

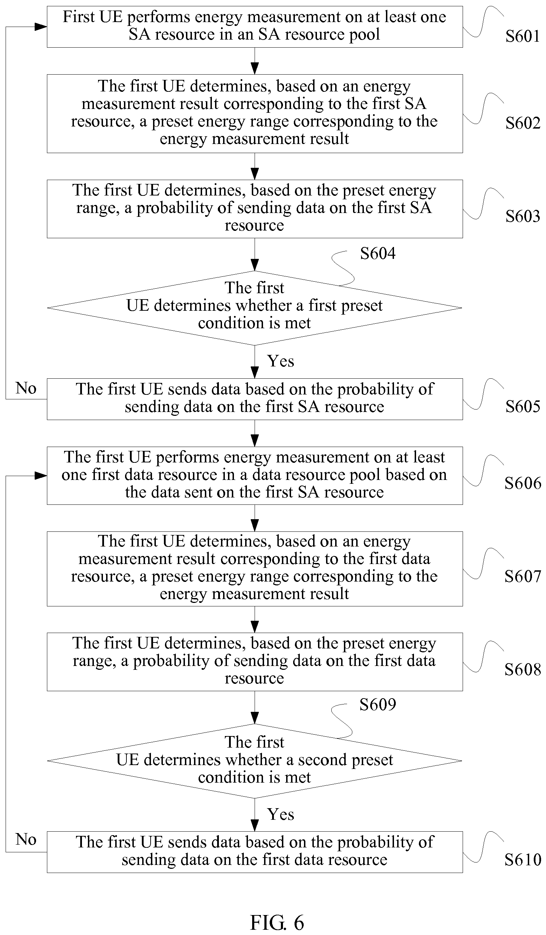

Based on the relationship between the SA resource pool and the data resource pool shown in FIG. 1, an embodiment of the present invention provides another resource scheduling method. FIG. 6 is a flowchart of a resource scheduling method according to another embodiment of the present invention. As shown in FIG. 6, the method includes the following steps.

S601: First UE performs energy measurement on at least one SA resource in an SA resource pool.

S601 is the same as S301, and specific descriptions are not repeated herein.

S602: The first UE determines, based on an energy measurement result corresponding to the first SA resource, a preset energy range corresponding to the energy measurement result.

S603: The first UE determines, based on the preset energy range, a probability of sending data on the first SA resource.

Step S602 and step S603 are described in combination. The first UE may pre-configure a plurality of preset energy ranges, and each preset energy range is corresponding to one data sending probability. In other words, preset energy ranges are in one-to-one correspondence with data sending probabilities.

Optionally, before that the first UE determines, based on an energy measurement result corresponding to the first resource, a preset energy range corresponding to the energy measurement result, the method further includes: The first UE determines a feature attribute of to-be-sent data. In this case, that the first UE determines, based on an energy measurement result corresponding to the first SA resource, a preset energy range corresponding to the energy measurement result includes: The UE determines, based on the energy measurement result corresponding to the first SA resource and the feature attribute of the to-be-sent data, the preset energy range corresponding to the energy measurement result.

S604: The first UE determines whether a first preset condition is met; and if the first preset condition is met, performs step S605, or if the first preset condition is not met, performs step S601.

The first preset condition includes that the to-be-sent data of the first UE has a highest priority among to-be-sent data on the first SA resource, that a volume of the to-be-sent data of the first UE has not changed, that quality of a channel desired to be used for the to-be-sent data of the first UE is greater than a quality threshold, that a time for which the first UE occupies the first SA resource is less than a time threshold, or that a location of the first UE has not changed.

S605: The first UE sends data based on the probability of sending data on the first SA resource.

The data sent includes the scheduling assignment information described in the present invention.

S606: The first UE performs energy measurement on at least one first data resource in a data resource pool based on the data sent on the first SA resource.

The first UE can determine, based on the scheduling assignment information sent on the first SA resource, which data resource is to be indicated as being occupied, namely, a second data resource, and the first UE performs energy measurement on a first data resource other than a second data resource in the data resource pool.

S607: The first UE determines, based on an energy measurement result corresponding to the first data resource, a preset energy range corresponding to the energy measurement result.

S608: The first UE determines, based on the preset energy range, a probability of sending data on the first data resource.

S609: The first UE determines whether a second preset condition is met; and if the second preset condition is met, performs step S610, or if the second preset condition is not met, performs step S606.

The second preset condition includes that the to-be-sent data of the first UE has a highest priority among to-be-sent data on the first data resource, that a volume of the to-be-sent data of the first UE has not changed, that quality of a channel desired to be used for the to-be-sent data of the first UE is greater than a quality threshold, that a time for which the first UE occupies the first data resource is less than a time threshold, or that a location of the first UE has not changed.

S610: The first UE sends data based on the probability of sending data on the first data resource.

In this embodiment of the present invention, energy measurement is first performed on the first SA resource in the SA resource pool, so that the first UE sends data based on the probability of sending data on the first SA resource, reducing resource collision on the first SA resource. Further, the first UE sends data based on the probability of sending data on the first data resource, reducing resource collision on the first data resource, and thereby improving communication reliability.

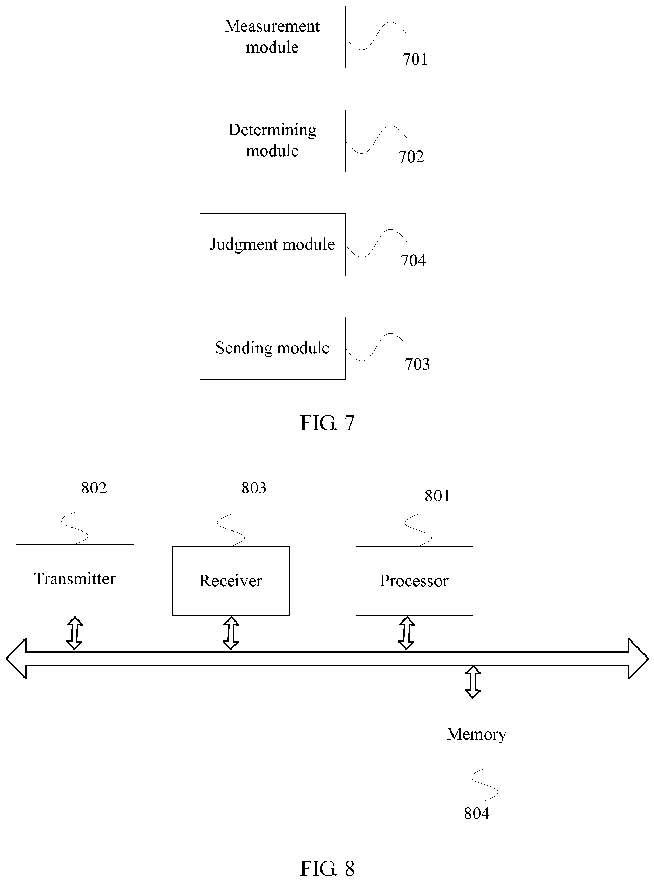

FIG. 7 is a schematic structural diagram of a resource scheduling apparatus according to an embodiment of the present invention. The apparatus is first user equipment UE, and the apparatus includes:
a measurement module 701, configured to perform energy measurement on at least one first resource in a resource pool;
a determining module 702, configured to determine, based on an energy measurement result corresponding to the first resource, a probability of sending data on the first resource; and
a sending module 703, configured to send data based on the probability of sending data on the first resource, where
the first resource is a resource, in the resource pool, that is not indicated as being occupied.

The resource scheduling apparatus in this embodiment of the present invention may be configured to execute the technical solution of the method embodiment corresponding to FIG. 3, with a similar principle and a similar technical effect, and details are not described herein again.

Optionally, the resource pool is a scheduling assignment resource pool or a data resource pool, where the scheduling assignment resource pool includes at least one scheduling assignment resource; and the scheduling assignment resource is used to carry scheduling assignment information sent by second UE, where the scheduling assignment information is used to indicate a data resource, in the data resource pool, used to carry to-be-sent data of the second UE.

Optionally, the determining module 702 is specifically configured to: determine, based on the energy measurement result corresponding to the first resource, a preset energy range corresponding to the energy measurement result; and determine, based on the preset energy range, the probability of sending data on the first resource, where a greater energy measurement result is corresponding to a lower probability of sending data on the first resource, and a smaller energy measurement result is corresponding to a higher probability of sending data on the first resource.

Further, the determining module 702 is further configured to determine a feature attribute of to-be-sent data; and
the determining module 702 is specifically configured to determine, based on the energy measurement result corresponding to the first resource and the feature attribute of the to-be-sent data, the preset energy range corresponding to the energy measurement result.

Further, the apparatus further includes a judgment module 704. The judgment module 704 is configured to determine whether a preset condition is met; and if the preset condition is met, the sending module 703 sends data based on the probability of sending data on the first resource; or if the preset condition is not met, the measurement module 701 performs energy measurement on at least one first resource in the resource pool, where
the preset condition includes that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

Optionally, the measurement module 701 is specifically configured to perform reference signal received power RSRP measurement or reference signal received quality RSRQ measurement on the at least one first resource in the resource pool.

FIG. 8 is a schematic structural diagram of a resource scheduling apparatus according to another embodiment of the present invention. The apparatus is first user equipment UE, and the apparatus includes a processor 801 and a transmitter 802, where
the processor 801 is configured to:
perform energy measurement on at least one first resource in a resource pool; and
determine, based on an energy measurement result corresponding to the first resource, a probability of sending data on the first resource; and
the transmitter 802 is configured to send data based on the probability of sending data on the first resource, where
the first resource is a resource, in the resource pool, that is not indicated as being occupied.

In addition, the apparatus further includes a receiver 803 and a memory 804. The receiver 803 is configured to receive data sent by another UE, and the memory 804 is configured to store an instruction to be executed by the processor 801.

Optionally, the resource pool is a scheduling assignment resource pool or a data resource pool, where
the scheduling assignment resource pool includes at least one scheduling assignment resource; and the scheduling assignment resource is used to carry scheduling assignment information sent by second UE, where the scheduling assignment information is used to indicate a data resource, in the data resource pool, used to carry to-be-sent data of the second UE.

Optionally, the processor 801 is specifically configured to: determine, based on the energy measurement result corresponding to the first resource, a preset energy range corresponding to the energy measurement result; and determine, based on the preset energy range, the probability of sending data on the first resource, where a greater energy measurement result is corresponding to a lower probability of sending data on the first resource, and a smaller energy measurement result is corresponding to a higher probability of sending data on the first resource.

Optionally, the processor 801 is further configured to determine a feature attribute of to-be-sent data, and the processor 801 is specifically configured to determine, based on the energy measurement result corresponding to the first resource and the feature attribute of the to-be-sent data, the preset energy range corresponding to the energy measurement result.

Optionally, the processor 801 is further configured to determine whether a preset condition is met; and if the preset condition is met, the transmitter 802 sends data based on the probability of sending data on the first resource; or if the preset condition is not met, the processor 801 performs energy measurement on at least one first resource in the resource pool, where
the preset condition includes that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

Optionally, the processor 801 is specifically configured to perform reference signal received power RSRP measurement or reference signal received quality RSRQ measurement on the at least one first resource in the resource pool.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A resource scheduling method, comprising:
performing, by first user equipment UE, energy measurement on at least one first resource in a resource pool;
determining, by the first UE based on an energy measurement result corresponding to the first resource, a probability of sending data on the first resource; and
sending, by the first UE, data based on the probability of sending data on the first resource, wherein
the first resource is a resource, in the resource pool, that is not indicated as being occupied.

2. The method according to claim 1, wherein the resource pool is a scheduling assignment resource pool or a data resource pool, wherein
the scheduling assignment resource pool comprises at least one scheduling assignment resource; and
the scheduling assignment resource is used to carry scheduling assignment information sent by second UE, wherein the scheduling assignment information is used to indicate a data resource, in the data resource pool, used to carry to-be-sent data of the second UE.

3. The method according to claim 1 or 2, the determining, by the first UE based on an energy measurement result corresponding to the first resource, a probability of sending data on the first resource comprises:
determining, by the first UE based on the energy measurement result corresponding to the first resource, a preset energy range corresponding to the energy measurement result; and
determining, by the first UE based on the preset energy range, the probability of sending data on the first resource, wherein
a greater energy measurement result is corresponding to a lower probability of sending data on the first resource, and
a smaller energy measurement result is corresponding to a higher probability of sending data on the first resource.

4. The method according to claim 3, wherein before the determining, by the first UE based on the energy measurement result corresponding to the first resource, a preset energy range corresponding to the energy measurement result, the method further comprises:
determining, by the first UE, a feature attribute of to-be-sent data; and
the determining, by the first UE based on the energy measurement result corresponding to the first resource, a preset energy range corresponding to the energy measurement result comprises:
determining, by the UE based on the energy measurement result corresponding to the first resource and the feature attribute of the to-be-sent data, the preset energy range corresponding to the energy measurement result.

5. The method according to any one of claims 1 to 4, wherein before the sending, by the first UE, data based on the probability of sending data on the first resource, the method further comprises:
determining, by the first UE, whether a preset condition is met; and
if the preset condition is met, performing the step of sending, by the first UE, data based on the probability of sending data on the first resource; or
if the preset condition is not met, performing the step of performing, by the first UE, energy measurement on at least one first resource in the resource pool, wherein
the preset condition comprises that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

6. The method according to any one of claims 1 to 5, wherein the performing, by first user equipment UE, energy measurement on at least one first resource in a resource pool comprises:
performing, by the first UE, reference signal received power RSRP measurement or reference signal received quality RSRQ measurement on the at least one first resource in the resource pool.

7. A resource scheduling apparatus, wherein the apparatus is first user equipment UE, and the apparatus comprises:
a measurement module, configured to perform energy measurement on at least one first resource in a resource pool;
a determining module, configured to determine, based on an energy measurement result corresponding to the first resource, a probability of sending data on the first resource; and
a sending module, configured to send data based on the probability of sending data on the first resource, wherein
the first resource is a resource, in the resource pool, that is not indicated as being occupied.

8. The apparatus according to claim 7, wherein the resource pool is a scheduling assignment resource pool or a data resource pool, wherein
the scheduling assignment resource pool comprises at least one scheduling assignment resource; and
the scheduling assignment resource is used to carry scheduling assignment information sent by second UE, wherein the scheduling assignment information is used to indicate a data resource, in the data resource pool, used to carry to-be-sent data of the second UE.

9. The apparatus according to claim 7 or 8, wherein the determining module is specifically configured to:
determine, based on the energy measurement result corresponding to the first resource, a preset energy range corresponding to the energy measurement result; and
determine, based on the preset energy range, the probability of sending data on the first resource, wherein
a greater energy measurement result is corresponding to a lower probability of sending data on the first resource, and
a smaller energy measurement result is corresponding to a higher probability of sending data on the first resource.

10. The apparatus according to claim 9, wherein the determining module is further configured to:
determine a feature attribute of to-be-sent data; and
the determining module is specifically configured to:
determine, based on the energy measurement result corresponding to the first resource and the feature attribute of the to-be-sent data, the preset energy range corresponding to the energy measurement result.

11. The apparatus according to any one of claims 7 to 10, further comprising a judgment module, wherein
the judgment module is configured to determine whether a preset condition is met; and if the preset condition is met, the sending module sends data based on the probability of sending data on the first resource; or
if the preset condition is not met, the measurement module performs energy measurement on at least one first resource in the resource pool, wherein
the preset condition comprises that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

12. The apparatus according to any one of claims 7 to 11, wherein the measurement module is specifically configured to:
perform reference signal received power RSRP measurement or reference signal received quality RSRQ measurement on the at least one first resource in the resource pool.

13. A resource scheduling apparatus, wherein the apparatus is first user equipment UE, and the apparatus comprises a processor and a transmitter, wherein
the processor is configured to:
perform energy measurement on at least one first resource in a resource pool; and
determine, based on an energy measurement result corresponding to the first resource, a probability of sending data on the first resource; and
the transmitter is configured to send data based on the probability of sending data on the first resource, wherein
the first resource is a resource, in the resource pool, that is not indicated as being occupied.

14. The apparatus according to claim 13, wherein the resource pool is a scheduling assignment resource pool or a data resource pool, wherein
the scheduling assignment resource pool comprises at least one scheduling assignment resource; and
the scheduling assignment resource is used to carry scheduling assignment information sent by second UE, wherein the scheduling assignment information is used to indicate a data resource, in the data resource pool, used to carry to-be-sent data of the second UE.

15. The apparatus according to claim 13 or 14, wherein the processor is specifically configured to:
determine, based on the energy measurement result corresponding to the first resource, a preset energy range corresponding to the energy measurement result; and
determine, based on the preset energy range, the probability of sending data on the first resource, wherein
a greater energy measurement result is corresponding to a lower probability of sending data on the first resource, and
a smaller energy measurement result is corresponding to a higher probability of sending data on the first resource.

16. The apparatus according to claim 15, wherein the processor is further configured to:
determine a feature attribute of to-be-sent data; and
the processor is specifically configured to:
determine, based on the energy measurement result corresponding to the first resource and the feature attribute of the to-be-sent data, the preset energy range corresponding to the energy measurement result.

17. The apparatus according to any one of claims 13 to 16, wherein
the processor is further configured to determine whether a preset condition is met; and
if the preset condition is met, the transmitter sends data based on the probability of sending data on the first resource; or
if the preset condition is not met, the processor performs energy measurement on at least one first resource in the resource pool, wherein
the preset condition comprises that the to-be-sent data of the first UE has a highest priority among to-be-sent data on the first resource, that a volume of the to-be-sent data of the first UE has not changed, that quality of a channel desired to be used for the to-be-sent data of the first UE is greater than a quality threshold, that a time for which the first UE occupies the first resource is less than a time threshold, or that a location of the first UE has not changed.

18. The apparatus according to any one of claims 13 to 17, wherein the processor is specifically configured to:
perform reference signal received power RSRP measurement or reference signal received quality RSRQ measurement on the at least one first resource in the resource pool.
